# FASCICULE DE BREVET EUROPEEN

(11) **EP 0 654 209 B1**
(45) Date de publication et mention de la délivrance du brevet: **07.04.1999**
(21) Numéro de dépôt: 94440075.3
(22) Date de dépôt: 23.11.1994
(51) Int. Cl.: A01D 78/10

(54) **Machine de fenaison**
Heuwerbungsmaschine
Haymaking machine

(30) Priorité: 23.11.1993 FR 9314217
(43) Date de publication de la demande: 24.05.1995
(73) Titulaire: KUHN S.A., F-67700 Saverne (FR)
(72) Inventeur: Aron, Jérôme, F-67330 Dossenheim Sur Zinsel (FR); Quirin, Michel, F-67310 Allenwiller (FR)
(74) Mandataire: Andres, Jean-Claude

(56) Documents cités:
- DE-A- 2 125 847
- DE-A- 2 419 749
- DE-U- 9 000 691
- DE-U- 9 010 176
- DE-U- 9 210 001
- DE-U- 9 212 692

## Description

La présente invention se rapporte à une machine de fenaison ayant un bâti composé d'une partie centrale munie d'un dispositif pour l'accrochage à un tracteur et des parties latérales articulées à la partie centrale, lesquelles parties comportent des carters auxquels sont associés des rotors qui sont montés rotatifs sur des axes supports sensiblement verticaux autour desquels ils sont entraînés en rotation durant le travail au moyen d'arbres d'entraînement logés dans le bâti, chacun desdits axes supports étant équipé, à son extrémité inférieure, d'une roue porteuse et étant fixé à son extrémité supérieure dans un manchon qui est monté pivotant dans un palier du carter correspondant du bâti et qui possède un levier pour le réglage de sa position dans ledit palier.

Il est ainsi possible d'orienter les axes supports des rotors de telle sorte que les roues porteuses forment des angles droits avec le bâti ou bien qu'elles soient dirigées obliquement vers la droite ou vers la gauche. Dans la première position, le bâti adopte une position perpendiculaire à la direction d'avancement durant le travail. Le fourrage déplacé par les rotors est alors projeté vers l'arrière et est étalé sur une bande de terrain d'une largeur sensiblement égale à celle de la machine. Lorsque les roues porteuses sont orientées vers la droite ou vers la gauche, le bâti se place dans une position oblique par rapport à la direction d'avancement. Les rotors projettent alors le fourrage en biais vers la droite ou vers la gauche en fonction de la position du bâti. Cela permet d'éloigner le fourrage des bords du terrain et, s'il y a lieu, d'un fossé, d'une clôture ou d'un autre obstacle.

Sur une machine de ce genre, connue dans la demande de brevet DE 21 25 847, le manchon de l'axe support de chaque rotor et son palier de guidage traversent la paroi supérieure du carter correspondant. Le levier de réglage est alors fixé sur l'extrémité du manchon qui s'étend en-dehors du carter.

Dans ce type de montage, le palier de guidage se situe totalement au-dessus de l'arbre d'entraînement en rotation des rotors. De ce fait, le manchon doit avoir une importante longueur. En sus, il n'est guidé dans le palier que sur une petite partie de sa longueur. Par conséquent, le porte à faux de l'axe support du rotor est très important. Cela peut entraîner une rapide augmentation du jeu entre le manchon et le palier, voire une rapide détérioration du montage.

Par ailleurs, sur la partie centrale du bâti de la machine les côtés supérieurs des carters ne sont plus disponibles pour la fixation du dispositif d'accrochage et/ou des moyens de protection.

La présente invention a pour but de proposer une machine telle que décrite dans l'introduction, mais n'ayant pas les inconvénients de la machine connue. L'invention doit permettre un meilleur guidage des axes supports des rotors, tout en conservant une construction simple des carters. Elle doit aussi permettre de garder les faces supérieures des carters libres en vue de la fixation du dispositif d'accouplement et/ou des moyens de protection.

A cet effet, d'importantes caractéristiques de l'invention consistent en ce que, au moins sur la partie centrale du bâti de la machine, le palier de guidage du manchon de l'axe support de chacun des rotors se situe totalement sur le côté interne de la paroi supérieure du carter correspondant, que ledit palier s'étend de part et d'autre de l'arbre d'entraînement en rotation des rotors et que le levier de réglage dudit manchon et de l'axe support correspondant se situe entre l'arbre d'entraînement en rotation et la paroi supérieure du carter et qu'il s'étend à travers une première fente du palier et une seconde fente prévue dans une paroi latérale du carter.

Dans cet agencement, le manchon de l'axe support des rotors est davantage guidé dans son palier. Le porte à faux est moins important que sur la machine connue. En sus, les côtés supérieurs des carters associés aux rotors sont totalement dégagés. Il est alors possible d'y relier le dispositif d'accouplement de la machine. Ces emplacements sont particulièrement avantageux du fait que lesdits côtés supérieurs sont relativement plats et parce qu'ils permettent une bonne répartition de la charge, grâce à leur éloignement l'un de l'autre et à leur situation près des extrémités de la partie centrale du bâti.

Une autre caractéristique de l'invention consiste en ce que les leviers de réglage des manchons et des axes supports correspondants sont reliés à des tringles de commande au moyen d'embouts pivotants. Ces derniers permettent un déplacement des tringles par rapport aux leviers, lorsque la machine est transposée dans la position de transport. De ce fait, il est possible d'effectuer cette transposition sans qu'il soit nécessaire d'amener préalablement les leviers et les axes supports dans une position définie.

D'autres caractéristiques et avantages de l'invention ressortiront des revendications et de la description ci-après d'un exemple de réalisation non limitatif de l'invention, en relation avec les dessins annexés dans lesquels :
- la figure 1 représente une vue de dessus d'une machine selon l'invention dans une première position de travail,
- la figure 2 représente une vue de dessus d'une machine selon l'invention dans une position de travail oblique,
- la figure 3 représente une coupe d'un rotor, suivant un plan vertical et parallèle au bâti de la machine,
- la figure 4 représente une coupe d'un rotor, suivant un plan vertical et perpendiculaire au bâti de la machine,
- la figure 5 représente une coupe du carter d'un rotor, suivant un plan horizontal situé au niveau de l'arbre d'entraînement du rotor,
- la figure 6 représente une coupe du carter d'un rotor, suivant un plan horizontal situé au niveau du levier de réglage.

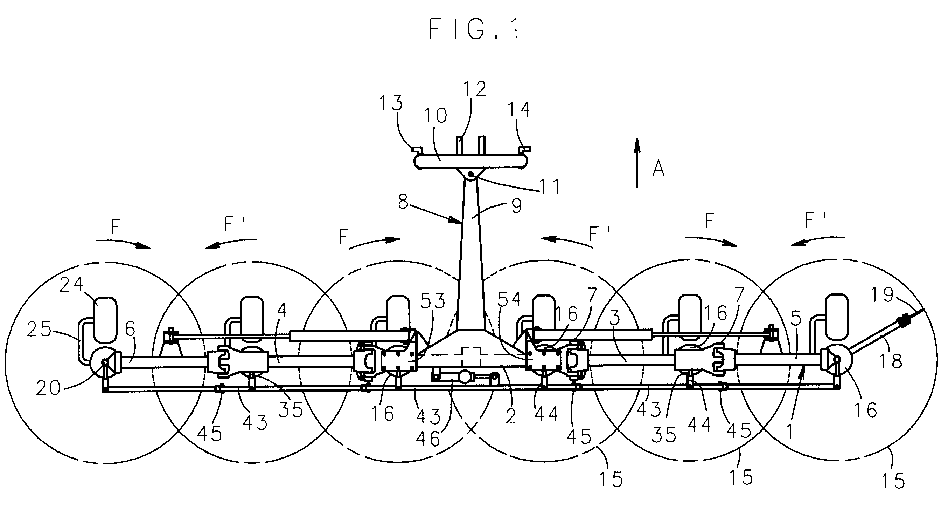

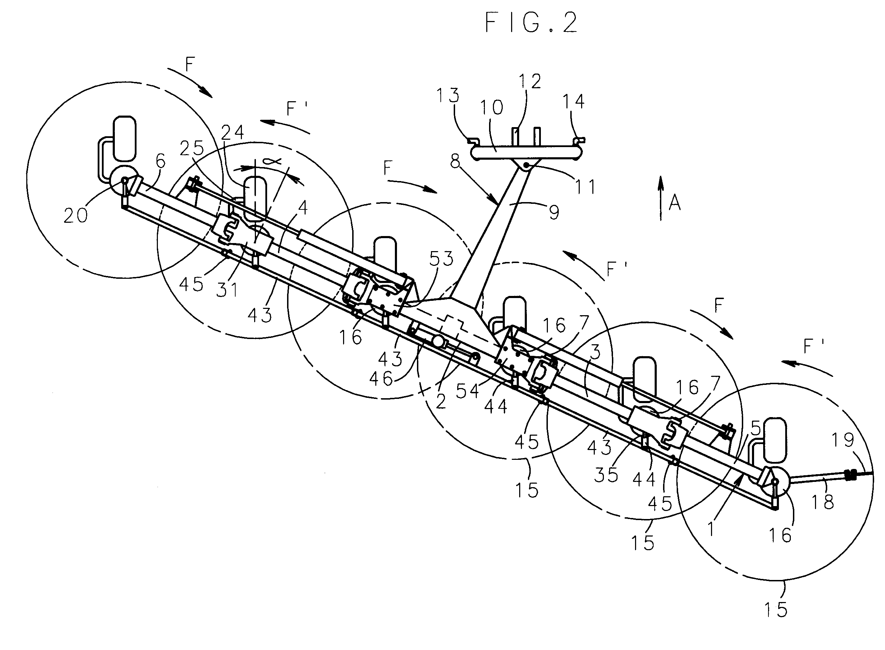

Tel que cela ressort des figures 1 et 2, la machine selon l'invention comporte un bâti (1) de forme allongée. Celui-ci se compose d'une partie centrale (2) et de quatre parties latérales (3 à 6) qui sont articulées entre-elles au moyen de pivots (7) dirigés dans la direction d'avancement indiquée par la flèche (A). Deux parties latérales (3, 5) se situent d'un côté de la partie centrale (2) et deux parties latérales (4, 6) de l'autre côté de ladite partie centrale (2). Celle-ci est munie d'un dispositif d'accrochage (8) à un tracteur qui n'est pas représenté et qui sert à animer et à déplacer la machine dans la direction d'avancement (A). Ce dispositif se compose d'une poutre (9) et d'une potence (10). Cette dernière est articulée sur la poutre (9) au moyen d'un axe (11) sensiblement vertical. Elle possède trois points d'accouplement (12, 13, 14) pour l'accrochage au tracteur. Le dispositif d'accrochage (8) pourrait également être constitué par un timon dans le cas d'une machine du type traînée.

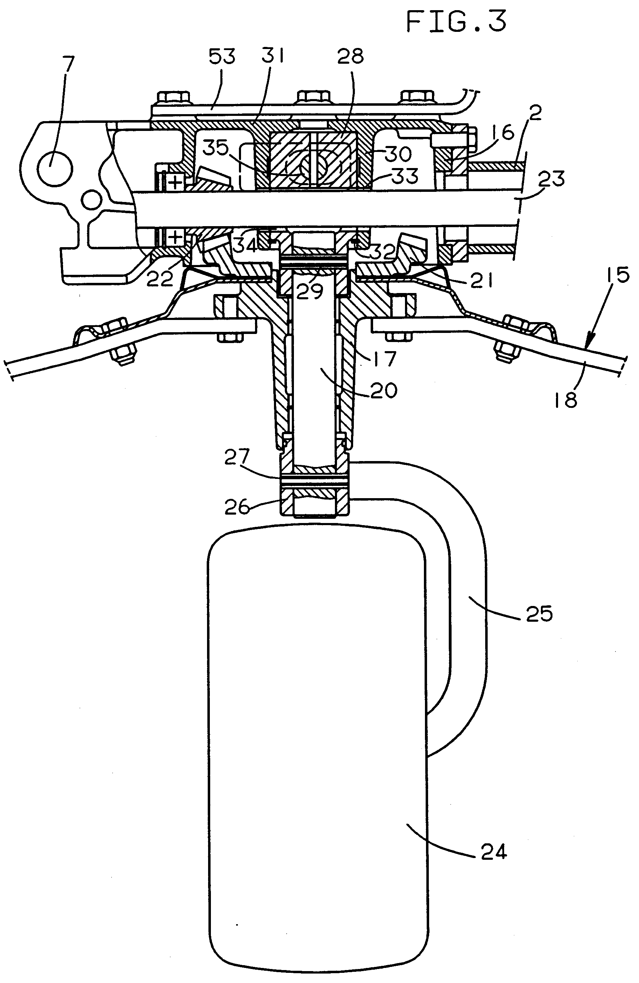

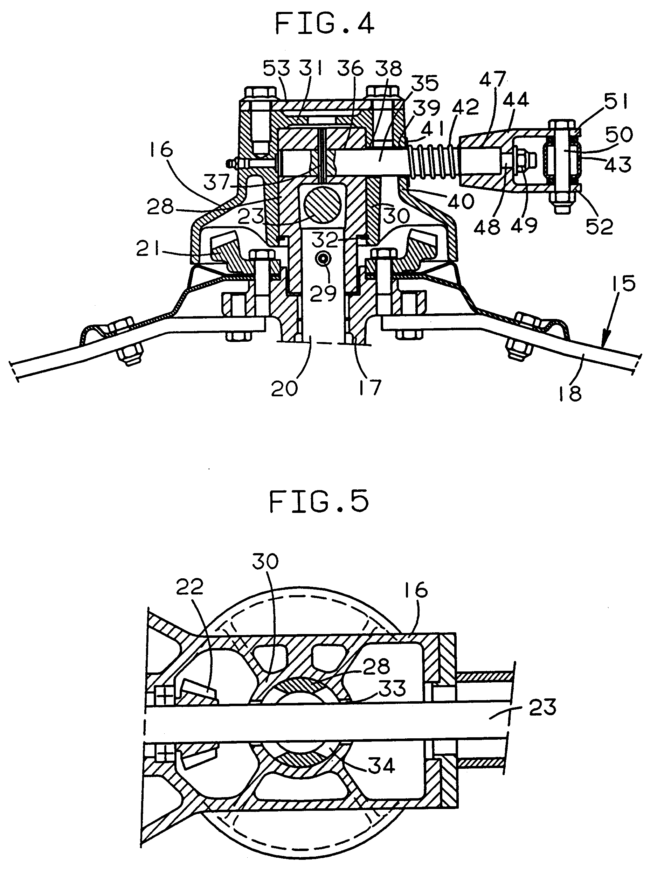

La partie centrale (2) du bâti (1) porte deux rotors (15) de fanage, tandis que chaque partie latérale porte un seul rotor de fanage (15). La machine représentée possède ainsi un total de six rotors (15). On comprendra que le nombre de rotors (15) peut varier en fonction du nombre de parties latérales que comporte le bâti (1). Chacun de ces rotors (15) est associé à un carter (16) de la partie centrale (2) ou de la partie latérale (3 à 6) correspondante. Il ressort notamment des figures 3 et 4 que chaque rotor (15) possède un moyeu (17) qui est muni de plusieurs bras (18). Ceux-ci s'étendent radialement et portent des fourches de travail (19). Ledit moyeu (17) est monté de manière à pouvoir tourner sur un axe support (20) sensiblement vertical. En vue de I'entraînement en rotation des rotors (15), chaque moyeu (17) possède une couronne dentée (21) avec laquelle engrène un pignon (22) dans le carter (16) correspondant. Chacun de ces pignons (22) est monté sur un arbre de transmission (23) qui est logé dans la partie centrale (2) et la partie latérale (3 à 6) correspondante. Ces différents arbres de transmission (23) sont reliés entre-eux par des cardans ou des articulations à doigts situés au niveau des pivots (7). Ils sont eux-mêmes entraînés en rotation par l'arbre de prise de force du tracteur au moyen d'un arbre de transmission intermédiaire.

Chaque axe support (20) d'un rotor (15) porte à son extrémité inférieure une roue porteuse (24) pouvant rouler sur le sol. Cette roue (24) est montée sur une colonne (25) solidaire d'un palier (26) qui est fixé sur l'axe support (20) par une goupille (27). L'extrémité supérieure de chaque axe support (20) est fixée dans un manchon (28) au moyen d'une goupille (29). Ce manchon (28) a une forme essentiellement cylindrique. Il est monté pivotant dans un palier (30) du carter (16) correspondant et est bloqué dans la direction axiale dans ledit palier (30) par la paroi supérieure (31) du carter (16) et par un circlip (32). Ce manchon (28) peut être constitué par une partie intégrante de l'axe support (20).

Sur la machine telle que représentée sur les figures 1 à 4, les paliers (30) des manchons (28) des axes supports (20) des rotors (15) de la partie centrale (2) et des parties latérales (3 et 4) du bâti (1) se situent totalement sur le côté interne de la paroi supérieure (31) du carter (16) correspondant. Le côté supérieur de ces parois (31) est alors totalement dégagé. Les parois (31) des carters (16) de la partie centrale (2) peuvent ainsi porter des plaques de fixation (53, 54) auxquelles est reliée la poutre (9) du dispositif d'accrochage (8). Ces plaques (53, 54), ainsi que les parois (31) des carters (16) des parties latérales (3 et 4) peuvent également porter un dispositif de protection.

Lesdits paliers (30) s'étendent en sus de part et d'autre des arbres (23) servant à I'entraînement en rotation des rotors (15). Chaque palier (30) possède un orifice (33) dont le diamètre est légèrement supérieur à celui de l'arbre d'entraînement (23) correspondant et par lequel passe ce dernier. Chaque manchon (28) qui est logé dans un de ces paliers (30) possède également un orifice (34) à travers lequel passe l'arbre d'entraînement (23). Ces paliers (30) assurent ainsi un bon guidage des manchons (28) et des axes supports (20). Ledit orifice (34) des manchons (28) possède une forme telle que ces derniers puissent tourner autour de leurs axes longitudinaux sans entrer en contact avec les arbres d'entraînement (23) (voir figure 5).

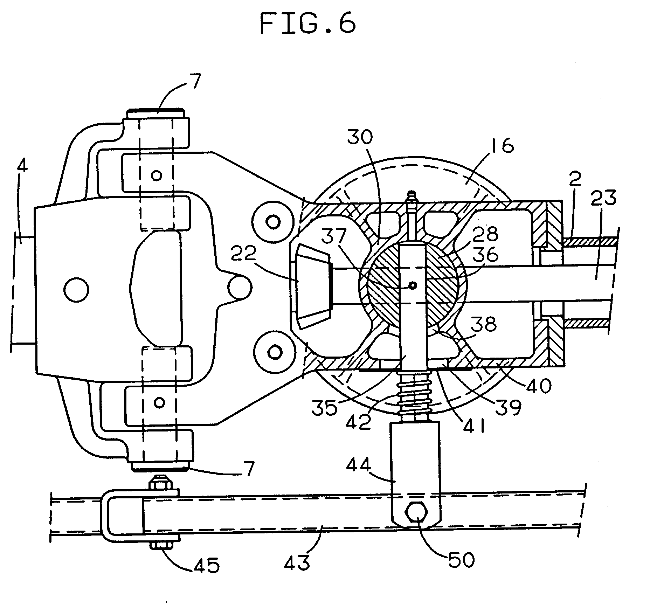

Chaque manchon (28) possède un levier (35) pour le réglage de sa position dans le palier (30) et, par son intermédiaire, de la position de l'axe support (20) et de la roue porteuse (24) correspondants. Sur les rotors (15) de la partie centrale (2) et des parties latérales (3 et 4) du bâti (1), les leviers (35) sont engagés dans des orifices (36) des manchons (28) et sont rendus solidaires de ceux-ci avec des goupilles (37). Ces leviers (35) se situent entre les arbres d'entraînement (23) et les parois supérieures (31) des carters (16). Ils s'étendent hors des carters (16) à travers une première ouverture ou fente (38) prévue dans chaque palier (30) et une seconde ouverture ou fente (39) prévue dans la paroi latérale (40) de chaque carter (16). Les deux fentes (38 et 39) précitées ont une forme allongée. Chaque levier (35) porte une plaquette d'obturation (41) de la fente (39) de la paroi latérale (40). Cette plaquette (41) se déplace avec le levier (35) et empêche l'introduction de corps étrangers dans le carter (16). Sur chaque levier (35) est en sus monté un ressort de pression (42) qui pousse la plaquette (41) contre la paroi latérale (40). De ce fait, elle reste constamment en contact avec ladite paroi (40) (voir figure 6).

Les axes supports (20) des rotors (15) des deux parties latérales extérieures (5 et 6) du bâti (1) peuvent être montés de la même manière que celle décrite ci-dessus. Cependant, du fait que l'arbre d'entraînement en rotation (23) ne s'étend pas par-dessus lesdits axes supports (20), ceux-ci peuvent être prolongés vers le haut et dépasser de la paroi supérieure (31) des carters (16). Les leviers de réglage (35) peuvent alors être fixés directement sur les extrémités de ces axes supports (20).

Tous les leviers de réglage (35) des axes supports (20) des rotors (15) de la machine sont reliés à des tringles de commande (43) au moyen d'embouts (44). Ces tringles (43) sont sensiblement parallèles à la partie centrale (2) et aux parties latérales (3 à 6) du bâti (1). Elles sont articulées entre-elles au moyen d'axes (45) sensiblement parallèles aux pivots (7) et situés pratiquement dans le prolongement de ceux-ci. La partie centrale (2) du bâti (1) porte un vérin hydraulique (46) dont la tige est articulée sur la tringle de commande (43) qui est parallèle à ladite partie centrale (2).

La liaison entre les leviers de réglage (35) et les tringles (43) est assurée au moyen d'embouts (44) qui ont la forme de fourches. Ils sont montés pivotants sur les extrémités des leviers de réglage (35). A cet effet, chaque embout (44) possède un orifice (47) dans lequel pénètre l'extrémité du levier (35) correspondant. Cette extrémité comporte une partie filetée (48) sur laquelle est vissé un écrou (49) qui retient l'embout (44) sur le levier (35). Lesdites extrémités des leviers (35) sont sensiblement perpendiculaires aux axes supports (20) des rotors (15). Cela permet aux embouts (44) et aux tringles (43) de se déplacer par rapport auxdits leviers (35) dans un plan parallèle au plan contenant les axes supports (20).

Les embouts (44) sont articulés sur les tringles (43) au moyen d'axes (50) qui sont sensiblement parallèles aux axes supports (20) des rotors (15). Ces tringles (43) se situent entre deux plats (51 et 52) de chaque embout (44), les axes (50) traversant lesdites tringles (43) et lesdits plats (51 et 52) (voir figure 4).

Durant le travail, la machine est accouplée à un tracteur qui permet de la déplacer dans la direction (A). Les rotors (15) sont entraînés en rotation, autour de leurs axes supports (20) respectifs, de telle sorte qu'ils tournent deux à deux en convergence à l'avant (flèches F et F'). Lors de cette rotation, leurs fourches (19) ramassent, dans la moitié avant de leur trajectoire, les végétaux qui se trouvent au sol, les déplacent vers l'arrière et les étalent à nouveau tout en provoquant leur retournement. Les différents rotors (15) peuvent suivre les dénivellations du sol en pivotant avec les parties (2 à 6) correspondantes du bâti (1) autour des pivots (7). L'ensemble du bâti (1) peut également pivoter autour de l'axe d'articulation (11) du dispositif d'accrochage (8) afin de bien suivre le tracteur dans les virages.

Dans la première position de travail qui est représentée sur la figure 1, le bâti (1) et les rotors (15) se situent sur une ligne sensiblement perpendiculaire au sens d'avancement (A). Les rotors (15) projettent alors les végétaux dans la direction opposée au sens d'avancement (A), de telle sorte qu'ils retombent pratiquement sur la même bande de terrain. Les roues porteuses (24) sont bloquées dans une direction dans laquelle elles sont sensiblement perpendiculaires au bâti (1). Ce blocage est assuré au moyen du vérin hydraulique (46) qui bloque les tringles (43). Celles-ci bloquent à leur tour les axes supports (20) desdites roues porteuses (24) par l'intermédiaire des leviers (35) et des manchons (28). Il peut éventuellement être prévu un dispositif de blocage mécanique entre le bâti (1) et les tringles (43) en vue de mieux définir les différentes positions de ces dernières. Ce dispositif serait avantageusement commandé depuis le tracteur.

La machine peut être transposée dans la deuxième position de travail représentée sur la figure 2 en actionnant le vérin hydraulique (46) de telle sorte qu'il s'allonge. Il déplace alors les tringles (43) vers le côté droit de la machine. Celles-ci entraînent tous les leviers (35) qui font tourner les manchons (28) et les axes supports (20) dans les paliers (30). Lesdits axes (20) orientent alors les roues porteuses (24) vers le côté gauche du bâti (1) jusqu'à ce qu'elles forment des angles α d'environ 25° par rapport à leur position initiale.

Toutefois, étant donné que ces roues porteuses (24) restent inchangées dans la direction d'avancement (A), l'ensemble du bâti (1) tourne autour de l'axe d'articulation (11) du dispositif d'accrochage (8) et se place dans une position oblique par rapport à la direction d'avancement (A). Les rotors (15) se situent alors également sur une ligne oblique et déplacent les végétaux en biais par rapport à la direction d'avancement (A).

Pour revenir dans la première position de travail, il suffit de commander le vérin hydraulique (46), de sorte qu'il se raccourcisse et ramène les tringles (43), les leviers (35), les manchons (28), les axes supports (20) et les roues porteuses (24) dans leur position initiale.

La machine peut être transposée dans une troisième position de travail qui n'est pas représentée. Pour cela, il suffit de commander le vérin hydraulique (46), lorsque la machine est dans sa première position de travail, de telle sorte qu'il se raccourcisse. Il tire alors les tringles (43) vers le côté gauche de la machine. Celles-ci font tourner, au moyen des leviers (35), les manchons (28) et les axes supports (20) dans les paliers (30), de telle sorte que les roues porteuses (24) s'orientent vers le côté droit du bâti (1). Celui-ci tourne alors autour de l'axe d'articulation (11) et se place dans une position oblique qui est inversée par rapport à celle de la deuxième position de travail décrite. Le retour dans la première position est obtenu en actionnant le vérin hydraulique (46), de telle sorte qu'il s'allonge. On choisira la deuxième ou la troisième position de travail en fonction du côté vers lequel on souhaite déplacer les végétaux.

Sur la machine selon l'invention, les parties latérales (3 à 6) du bâti (1) peuvent être relevées autour des pivots (7) pour la mise en position de transport à partir de n'importe laquelle des positions de travail. Lors de ce relevage, les tringles (43) pivotent autour de leurs axes d'articulation (45) et suivent lesdites parties latérales (3 à 6). Lorsque la machine se trouve dans la deuxième ou dans la troisième position de travail, ces axes d'articulation (45) sont légèrement décalés par rapport aux pivots (7). Les tringles (43) et les embouts (44) pivotent alors autour des extrémités des leviers (35), ce qui évite la déformation des tringles (43).

Il est bien évident que l'invention n'est pas limitée au mode de réalisation décrit et représenté sur les dessins annexés. Des modifications sont possibles, notamment en ce qui concerne la constitution des divers éléments ou par substitution d'équivalents techniques, sans sortir pour autant du domaine de protection tel que défini dans les revendications.

## Revendications

1. Machine de fenaison ayant un bâti (1) composé d'une partie centrale (2) munie d'un dispositif (8) pour l'accrochage à un tracteur et des parties latérales (3 à 6) articulées à la partie centrale (2), lesquelles parties (2 à 6) comportent des carters (16) auxquels sont associés des rotors (15) qui sont montés rotatifs sur des axes supports (20) sensiblement verticaux autour desquels ils sont entraînés en rotation durant le travail au moyen d'arbres d'entraînement (23) logés dans le bâti (1), chacun desdits axes supports (20) étant équipé à son extrémité inférieure d'une roue porteuse (24) et étant fixé à son extrémité supérieure dans un manchon (28) qui est monté pivotant dans un palier de guidage (30) prévu dans le carter (16) correspondant du bâti (1) et qui possède un levier (35) pour le réglage de sa position dans ledit palier (30), caractérisée par le fait qu'au moins sur la partie centrale (2) du bâti (1), le palier de guidage (30) du manchon (28) de l'axe support (20) de chacun des rotors (15) se situe totalement sur le côté interne de la paroi supérieure (31) du carter (16) correspondant, que ledit palier de guidage (30) s'étend de part et d'autre de l'arbre d'entraînement en rotation (23) des rotors (15) et que le levier de réglage (35) dudit manchon (28) et de l'axe support (20) correspondant se situe entre l'arbre d'entraînement en rotation (23) et la paroi supérieure (31) du carter (16) et qu'il s'étend à travers une première ouverture ou fente (38) du palier de guidage (30) et une seconde ouverture ou fente (39) prévue dans une paroi latérale (40) du carter (16).

2. Machine selon la revendication 1, caractérisée par le fait que le manchon (28) de l'axe support (20) est arrêté dans le sens de sa longueur, dans le palier (30) correspondant, d'une part, par la paroi supérieure (31) du carter (16) et, d'autre part, par un circlip (32).

3. Machine selon la revendication 1, caractérisée par le fait que le levier de réglage (35) porte une plaquette d'obturation (41) de la fente (39) de la paroi latérale (40).

4. Machine selon la revendication 3, caractérisée par le fait que la plaquette d'obturation (41) est poussée contre la paroi latérale (40) au moyen d'un ressort de pression (42).

5. Machine selon la revendication 1, caractérisée par le fait que les leviers de réglage (35) sont reliés à des tringles de commande (43) au moyen d'embouts pivotants (44).

6. Machine selon la revendication 5, caractérisée par le fait que les embouts (44) sont montés pivotants sur les extrémités des leviers de réglage (35).

7. Machine selon la revendication 6, caractérisée par le fait que les extrémités des leviers de réglage (35) sont sensiblement perpendiculaires aux axes supports (20) des rotors (15).

8. Machine selon la revendication 5, caractérisée par le fait que les embouts (44) sont articulés sur les tringles (43) au moyen d'axes (50) qui sont sensiblement parallèles aux axes supports (20) des rotors (15).

## Claims

1. Haymaking machine which has a frame (1) made up of a central part (2) equipped with a device (8) for hitching to a tractor and of lateral parts (3 to 6) articulated to the central part (2), which parts (2 to 6) comprise casings (16) with which are associated rotors (15) which are mounted to rotate on approximately vertical support spindles (20), about which they are driven in rotation during work by means of drive shafts (23) housed in the frame (1), each of the said support spindles (20) being equipped at its lower end with a carrying wheel (24) and being fixed at its upper end into a bush (28) which is mounted to pivot in a guide bearing (30) provided in the corresponding casing (16) of the frame (1) and which has a lever (35) for adjusting its position in the said bearing (30), ***characterized in*** that at least in the central part (2) of the frame (1) the guide bearing (30) of the bush (28) of the support spindle (20) of each of the rotors (15) is fully located on the inside of the upper wall (31) of the corresponding casing (16), that the said guide bearing (30) extends on either side of the drive shaft (23) that drives the rotors (15) in rotation, and that the lever (35) for adjusting the said bush (28) and the corresponding support spindle (20) is situated between the rotational-drive shaft (23) and the upper wall (31) of the casing (16) and that it extends through a first opening or slot (38) provided in the guide bearing (30) and a second opening or slot (39) provided in a lateral wall (40) of the casing (16).

2. Machine according to Claim 1, ***characterized in*** that the bush (28) of the support spindle (20) is retained in the corresponding bearing (30), in its lengthwise direction, by the upper wall (31) of the casing (16), on the one hand, and by a circlip (32), on the other hand.

3. Machine according to Claim 1, ***characterized in*** that the adjusting lever (35) carries a small plate (41) for closing the slot (39) in the lateral wall (40).

4. Machine according to Claim 3, ***characterized in*** that the closing-off plate (41) is pushed against the lateral wall (40) by means of a pressure spring (42).

5. Machine according to Claim 1, ***characterized in*** that the adjusting levers (35) are connected to operating rods (43) by means of pivoting end fittings (44).

6. Machine according to Claim 5, ***characterized in*** that the end fittings (44) are mounted to pivot on the ends of the adjusting levers (35).

7. Machine according to Claim 6, ***characterized in*** that the ends of the adjusting levers (35) are approximately perpendicular to the support spindles (20) of the rotors (15).

8. Machine according to Claim 5, ***characterized in*** that the end fittings (44) are articulated to the rods (43) by means of axles (50) which are approximately parallel to the support spindles (20) of the rotors (15).

## Patentansprüche

1. Heuwerbungsmaschine mit einem Rahmen (1), der aus einem mit einer Vorrichtung (8) zum Anhängen an einen Traktor versehenen Mittelteil (2) und an dem Mittelteil (2) angelenkten Seitenteilen (3 bis 6) besteht, wobei die Teile (2 bis 6) Getriebekästen (16) aufweisen, denen Rotoren (15) zugeordnet sind, welche an im wesentlichen vertikalen Tragachsen (20) drehbar angebracht sind, um die sie im Betrieb mittels im Rahmen (1) untergebrachter Antriebswellen (23) drehangetrieben werden, wobei jede der Tragachsen (20) an ihrem unteren Ende mit einem Stützrad (24) versehen ist und an ihrem oberen Ende in einer Buchse (28) befestigt ist, die in einem im entsprechenden Getriebekasten (16) des Rahmens (1) vorgesehenen Führungslager (30) schwenkbar angebracht ist und einen Hebel (35) zur Einstellung ihrer Position in dem Lager (30) aufweist, ***dadurch gekennzeichnet,*** daß sich das Führungslager (30) der Buchse (28) der Tragachse (20) jedes Rotors (15) zumindest am Mittelteil (2) des Rahmens (1) vollständig auf der Innenseite der oberen Wand (31) des dazugehörigen Getriebekastens (16) befindet, daß sich das Führungslager (30) auf beiden Seiten der Welle (23) zum Drehantrieb der Rotoren (15) erstreckt und daß sich der Hebel (35) zur Einstellung der Buchse (28) und der dazugehörigen Tragachse (20) zwischen der Drehantriebswelle (23) und der oberen Wand (31) des Getriebekastens (16) befindet und sich durch eine erste Öffnung oder einen ersten Schlitz (38) des Führungslagers (30) und eine zweite Öffnung oder einen zweiten Schlitz (39), die bzw. der in einer Seitenwand (40) des Getriebekastens (16) vorgesehen ist, erstreckt.

2. Maschine nach Anspruch 1, ***dadurch gekennzeichnet,*** daß die Buchse (28) der Tragachse (20) in ihrer Längsrichtung im dazugehörigen Lager (30) einerseits durch die obere Wand (31) des Getriebekastens (16) und andererseits durch einen Sicherungsring (32) festgelegt wird.

3. Maschine nach Anspruch 1, ***dadurch gekennzeichnet,*** daß der Einstellhebel (35) eine Scheibe (41) zum Verschließen des Schlitzes (39) der Seitenwand (40) aufweist.

4. Maschine nach Anspruch 3, ***dadurch gekennzeichnet,*** daß die Verschlußscheibe (41) mittels einer Druckfeder (42) gegen die Seitenwand (40) gedrückt wird.

5. Maschine nach Anspruch 1, ***dadurch gekennzeichnet,*** daß die Einstellhebel (35) mittels schwenkbarer Endstücke (44) mit Steuergestängen (43) verbunden sind.

6. Maschine nach Anspruch 5, ***dadurch gekennzeichnet,*** daß die Endstücke (44) schwenkbar an den Enden der Einstellhebel (35) angebracht sind.

7. Maschine nach Anspruch 6, ***dadurch gekennzeichnet,*** daß die Enden der Einstellhebel (35) im wesentlichen senkrecht zu den Tragachsen (20) der Rotoren (15) verlaufen.

8. Maschine nach Anspruch 5, ***dadurch gekennzeichnet,*** daß die Endstücke (44) mittels im wesentlichen parallel zu den Tragachsen (20) der Rotoren (15) verlaufender Achsen (50) an den Gestängen (43) angelenkt sind.
